# EUROPÄISCHE PATENTSCHRIFT

(11) **EP 1 931 081 B1**
(45) Veröffentlichungstag und Bekanntmachung des Hinweises auf die Patenterteilung: **27.09.2017**
(21) Anmeldenummer: 07122600.5
(22) Anmeldetag: 07.12.2007
(51) Int. Cl.: H04L 12/10, G05B 19/05, G06F 13/38

(54) **Bussystem**
Bus system
Système de bus

(30) Priorität: 09.12.2006 DE 202006018640 U
(43) Veröffentlichungstag der Anmeldung: 11.06.2008
(73) Patentinhaber: Weidmüller Interface GmbH & Co. KG, 32758 Detmold (DE)
(72) Erfinder: Hoffmann, Andreas, 32657 Lemgo (DE)
(74) Vertreter: Dantz, Jan Henning

(56) Entgegenhaltungen:
- EP-A2- 1 477 952
- DE-A1- 19 811 065
- DE-A1- 19 910 409
- DE-A1- 19 923 569

## Beschreibung

Die Erfindung betrifft ein Bussystem nach dem Oberbegriff des Anspruch 1.

Bussysteme sind an sich bekannt, beispielsweise als Feldbussysteme, die auf einem Busstandard, z.B. dem Profibus-Standard aufbauen.

Die DE 199 23 569 A1 offenbart eine gattungsgemäße Vorrichtung zur elektronischen Überwachung des Versorgungsstroms von ab einen Bus angeschlossenen Baugruppen, wobei allerdings keine in Reihe geschalteten Subbusverteiler vorgesehen sind.

Es ist allgemein auch bekannt, einzelne der Busteilnehmer eines Bussystems als aktive Verteiler mit einer Elektronikschaltung auszubilden, welche an die SPS angeschlossen sind. An die Verteiler mit Anschlüssen zum Anschluss von Feldgeräten wie Sensoren, Aktoren usw. können optional auch weitere Verteiler angeschlossen werden, um einen lokalen Subbus zu realisieren.

Problematisch ist, dass die Versorgungsspannung innerhalb des Subbusses typischerweise immer weiter abfällt, bis sie u. U. einen zur Spannungsversorgung notwendigen Mindestpegel unterschreitet.

Dieser Aufbau eines Bussystems hat sich zwar an sich bewährt. Wünschenswert wäre aber eine Vereinfachung der Überwachung des Subbusses.

Die Erfindung löst diese Aufgabe durch den Gegenstand des Anspruchs 1.

Erfindungsgemäß wird die Überwachung des Subbussystems durch die Einrichtung zum Ausgeben einer Warnmeldung deutlich vereinfacht.

Diese Einrichtung kann nach einfachster Ausgestaltung eine optische Anzeigeeinrichtung am Subbusverteiler sein. Alternativ oder ergänzend kann die Einrichtung zur Warnmeldung als Steuerungseinrichtung ausgebildet sein, welche die Ausgabe einer Warnmeldung besonders bevorzugt an den übergeordneten Verteiler des Feldbussystems veranlaßt.

Vorteilhafte Ausgestaltungen sind den Unteransprüchen zu entnehmen.

Nachfolgend wird die Erfindung unter Bezug auf die Zeichnung anhand eines Ausführungsbeispiels näher beschrieben. Es zeigt:

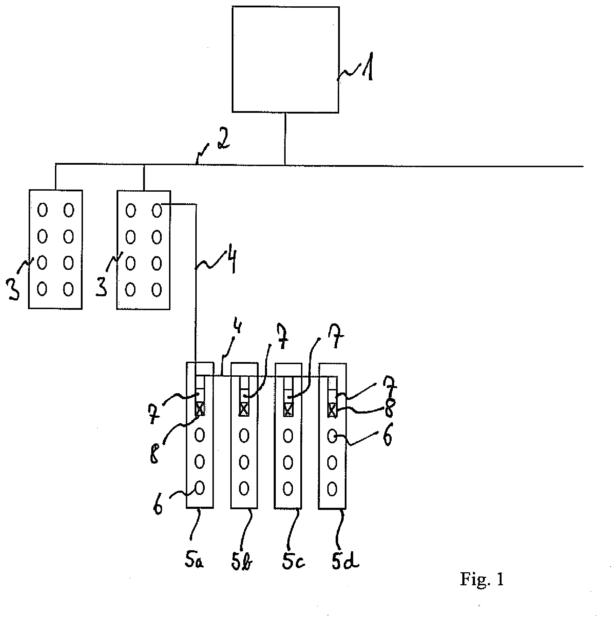

Fig. 1 eine schematische Darstellung der Anordnung eines erfindungsgemäßen Bussystems.

Dieses Bussystem umfasst zumindest eine übergeordnete Steuerungsvorrichtung 1 - insbesondere eine SPS, die beispielsweise selbst wiederum ein Bestandteil eines Bussystems, zum Beispiel eines Ethernet-Bussystems, sein kann.

Der SPS ist ein Feldbussystem zugeordnet, an welches über Busleitungen 2 Teilnehmer wie Aktoren, Sensoren und dgl. und (vorzugsweise aktive) Verteiler 3 angeschlossen sind.

An wenigstens einen der Verteiler sind über eine mehradrige Leitung 4 Subbusverteiler 5a, b, c, ... angeschlossen, die in Reihe geschaltet sind. Diese Subbusverteiler 5 weisen Anschlüsse 6 zum Anschluss weiterer Feldgeräte auf. Sie sind ferner mit einer Einrichtung 7 zur Spannungsüberwachung versehen, die eine Einrichtung zur Ausgabe einer Warnmeldung umfasst, die hier eine optische Anzeige 8 am Verteilergehäuse und eine Steuerungseinrichtung 9 zur Ausgabe einer Warnmeldung über die Leitung 4 zurück zum übergeordneten Verteiler 3 oder zur SPS 1 aufweist. Derart ist sofort ein Fehlerfall erkennbar bzw. bei der Konfiguration erkennbar, wie viele Subbusverteiler 5 installierbar sind.

**Bezugszeichen**

| | |
|---|---|
| Steuerungsvorrichtung | 1 |
| Busleitungen | 2 |
| Verteiler | 3 |
| Leitung | 4 |
| Subbusverteiler | 5a, b, c, ... |
| Anschlüsse | 6 |
| Einrichtung | 7 |
| Anzeige | 8 |
| Steuerungseinrichtung | 9 |

## Patentansprüche

1. Bussystem mit einer Steuerungsvorrichtung (1), Busleitungen, Busteilnehmern, wobei mindestens ein Busteilnehmer ein Verteiler (3) ist, wobei mindestens ein Busteilnehmer ein Aktor ist, und wobei mindestens ein Busteilnehmer ein Sensor ist, Subbusverteilem, einem Subbussystem, wobei an die Steuerungsvorrichtung über die Busleitungen (2) die Busteilnehmer des Bussystems angeschlossen sind, **dadurch gekennzeichnet, dass** an den Verteiler (3) wiederum die in Reihe geschalteten Subbusverteiler (5) des Subbussystems angeschlossen sind, welche jeweils eine Einrichtung (7) zur Überwachung der am Subbusverteiler anliegenden Versorgungsspannung und Anschlüsse (6) aufweisen, wobei die Subbusverteiler (5) ferner mit einer Einrichtung zur Ausgabe einer Wammeldung beim Unterschreiten einer Mindestversorgungsspannung versehen sind.

2. Bussystem nach Anspruch 1, **dadurch gekennzeichnet, dass** die Einrichtung zur Ausgabe einer Warnmeldung beim Unterschreiten einer Mindestversorgungsspannung eine Steuerungseinrichtung (9) zur Ausgabe einer Warnmeldung zurück zum übergeordneten Verteiler oder zur übergeordneten Steuerungsvorrichtung umfasst.

3. Bussystem nach Anspruch 1 oder 2, **dadurch gekennzeichnet, dass** die Einrichtung zur Ausgabe einer Wammeldung beim Unterschreiten einer Mindestversorgungsspannung eine optische Anzeige (8) an einem Gehäuse der Subbusverteiler (5) umfasst.

4. Bussystem nach einem der vorstehenden Ansprüche, **dadurch gekennzeichnet, dass** die Steuerungsvorrichtung (1) eine speicherprogrammierbare Steuerung ist.

## Claims

1. Bus system comprising a control device (1), bus lines, bus subscribers, wherein at least one bus subscriber is a distributor (3), wherein at least one bus subscriber is an actuator, and wherein at least one bus subscriber is a sensor, subbus distributors, a subbus system wherein the bus subscribers of the bus system are connected to the control device via the bus lines (2), **characterized in that** the series-connected subbus distributors (5) of the subbus system are in turn connected to the distributor (3), which each comprise a device (7) for monitoring the supply voltage present at the subbus distributors and connections (6), wherein the subbus distributors (5) are further provided with a device for outputting a warning message when the supply voltage falls below a minimum.

2. The bus system according to claim 1, **characterized in that** the device for outputting a warning message when the supply voltage falls below a minimum comprises a control device (9) for outputting a warning message back to the superordinate distributor or to the superodinate control device.

3. The bus system according to claim 1 or 2, **characterized in that** the device for outputting a warning message when the supply voltage falls below a minimum comprises an optical display (8) on a housing of the subbus distributor (5).

4. The bus system according to one of the preceding claims, **characterized in that** the control device (1) is a memory programmable control.

## Revendications

1. Système de bus comprenant un dispositif de commande (1), des lignes de bus, des participants au bus, au moins un participant au bus étant un répartiteur (3), au moins un participant au bus étant un actionneur et au moins un participant au bus étant un capteur, et comprenant des répartiteurs de sous-bus, un système de sous-bus, les participants au bus du système de bus étant connectés au dispositif de commande par les lignes de bus (2), **caractérisé en ce qu'**au répartiteur (3) sont à leur tour connectés les répartiteurs de sous-bus (5) du système de sous-bus couplés en série, lesquels présentent chacun un moyen (7) pour surveiller la tension d'alimentation appliquée au répartiteur de sous-bus et des bornes (6), les répartiteurs de sous-bus (5) étant en outre pourvus d'un moyen pour délivrer un message d'avertissement en cas de non-atteinte d'une tension d'alimentation minimale.

2. Système de bus selon la revendication 1, **caractérisé en ce que** le moyen pour délivrer un message d'avertissement en cas de non-atteinte d'une tension d'alimentation minimale comprend un moyen de commande (9) pour délivrer un message d'avertissement en retour au répartiteur supérieur ou au dispositif de commande supérieur.

3. Système de bus selon la revendication 1 ou 2, **caractérisé en ce que** le moyen pour délivrer un message d'avertissement en cas de non-atteinte d'une tension d'alimentation minimale comprend un affichage optique (8) sur un boîtier du répartiteur de sous-bus (5).

4. Système de bus selon l'une des revendications précédentes, **caractérisé en ce que** le dispositif de commande (1) est un automate programmable industriel.
